# EUROPÄISCHE PATENTSCHRIFT

(11) **EP 2 445 737 B1**
(45) Veröffentlichungstag und Bekanntmachung des Hinweises auf die Patenterteilung: **29.05.2013**
(21) Anmeldenummer: 10726973.0
(22) Anmeldetag: 24.06.2010
(51) Int. Cl.: B60G 21/055

(54) **HALTEVORRICHTUNG FÜR EIN LAGER EINES ACHSSTABILISATORS**
MOUNTING MEANS FOR A STABILISER BAR
DISPOSITIF DE FIXATION POUR UNE BARRE STABILISATRICE

(30) Priorität: 25.06.2009 EP 09163810
(43) Veröffentlichungstag der Anmeldung: 02.05.2012
(73) Patentinhaber: BASF SE, 67056 Ludwigshafen (DE); Schneegans GmbH, 46446 Emmerich am Rhein (DE)
(72) Erfinder: KLINK, Holger, 64367 Mühltal (DE); PLATZ, Reinhold G, 64342 Seeheim-Jugenheim (DE); AUMER, Bernhard, 66996 Fischbach (DE); SCHNEEGANS, Dieter, 46446 Emmerich (DE); GATTRINGER, Rudolf, A-4284 Tragwein (AT)
(74) Vertreter: Kudla, Karsten
(86) Internationale Anmeldenummer: PCT/EP2010/059030
(87) Internationale Veröffentlichungsnummer: WO 2010/149756

(56) Entgegenhaltungen:
- EP-A1- 0 384 799
- WO-A1-2008/054263
- DE-A1-102007 005 567
- DE-A1-102007 038 494
- US-A- 3 498 631
- US-A- 5 112 031
- US-A- 6 123 352

## Beschreibung

Die Erfindung betrifft eine Haltevorrichtung für ein Lager eines Achsstabilisators in einem Kraftfahrzeug nach dem Oberbegriff des Anspruchs 1 und ein Verfahren zur Auslegung einer solchen Haltevorrichtung.

Achsstabilisatoren werden in Kraftfahrzeugen eingesetzt, um zum Beispiel Kräfte von einem Rad des Fahrzeugs auch an das andere Rad zu übertragen, um so zum Beispiel ungleichmäßige Belastungen zu reduzieren. Ein Achsstabilisator ist üblicherweise in Form einer Stange ausgebildet. Diese wird in Nähe der Räder an den Federbeinen oder an der Fahrzeugkarosserie fixiert. Zur Fixierung des Achsstabilisators werden geeignete Haltevorrichtungen eingesetzt. Die Haltevorrichtungen weisen üblicherweise einen Haltebügel und eine Aufnahme aus einem Elastomermaterial auf. Der Achsstabilisator wird von der Aufnahme aus Elastomermaterial umschlossen und diese mit Hilfe des Haltebügels befestigt.

Derzeit werden Haltebügel üblicherweise aus Metall hergestellt, um die darauf wirkenden Belastungen aufnehmen zu können. Ein solcher Haltebügel ist zum Beispiel in DE 10 2005 002 889 A1 offenbart

Die Aufnahme aus dem Elastomermaterial dient dazu, Relativbewegungen des Achsstabilisators zum Haltebügel zu dämpfen. Da das elastische Material der Aufnahme üblicherweise nicht fest mit dem Haltebügel verbunden ist sondern lose von diesem umschlossen wird, können die Relativbewegungen des Achsstabilisators dazu führen, dass sich die Aufnahme aus dem elastischen Material im Haltebügel bewegt. Dies kann einerseits durch abwechselndes Haften und Rutschen im Haltebügel zu einer Geräuschentwicklung führen, andererseits wird auch das elastische Material stark mechanisch beansprucht, was zu Verschleiß an der Aufnahme aus elastischem Material führen kann.

Ein weiterer Nachteil des metallischen Haltebügels ist dessen vergleichsweise hohes Gewicht. Das hohe Gewicht von Bauteilen führt jedoch insgesamt zu einem erhöhten Kraftstoffverbrauch.

Ein Beispiel einer Haltevorrichtung mit einem Haltebügel aus Polymermaterial ist aus der US 6 123 352 A bekannt.

Aufgabe der vorliegenden Erfindung ist es, eine Haltevorrichtung für ein Lager eines Achsstabilisators bereitzustellen, der ein geringeres Gewicht als eine herkömmliche Haltevorrichtung mit einem Haltebügel aus Polymermaterial aufweist.

Gelöst wird die Aufgabe durch eine Haltevorrichtung für ein Lager eines Achsstabilisators in einem Kraftfahrzeug, umfassend eine Aufnahme für den Achsstabilisator aus einem elastischen Material sowie einen Haltebügel, der die Aufnahme aus dem elastischen Material zumindest teilweise umschließt, wobei der Haltebügel aus einem Polymermaterial gefertigt ist und eine Geometrie aufweist, die eine durch nachfolgende Schritte bestimmten Geometrie entspricht:
(a) Berechnung eines Ausnutzungsgrades der Festigkeit des Haltebügels durch eine Simulationsrechnung,
(b) Anpassen der Geometrie des Haltebügels und/oder der Lage des mindestens einen Anspritzpunktes des Haltebügels an das Ergebnis der Simulationsrechnung, wobei eine Verringerung der Wanddicke, Reduzierung der Anzahl an Versteifungselementen oder eine Verkleinerung der Versteifungselemente erfolgt, während der Ausnutzungsgrad einen vorgegebenen oberen Grenzwert übersteigt und eine Erhöhung der Wanddicke, eine Erhöhung der Anzahl an Versteifungselementen oder eine Verstärkung der Versteifungselemente erfolgt, während der Ausnutzungsgrad einen vorgegebenen unteren Grenzwert unterschreitet,
(c) Wiederholen der Schritte (a) und (b), während in Schritt (b) eine Änderung der Geometrie des Haltebügels und/oder der Lage des mindestens einen Anspritzpunktes durchgeführt wurde.

Durch die nach den Schritten (a) bis (b) bestimmte Geometrie ist es möglich, den Haltebügel so zu gestalten, dass durch Optimierung der Wanddicken, der Anordnung und der Anzahl von Verstärkungselementen die kleinstmögliche Menge an Polymermaterial für den Haltebügel verwendet werden kann, so dass es möglich ist, Gewicht einzusparen. Aufgrund der Belastung, die auf den Haltebügel wirkt und der gegenüber Stahl kleineren Festigkeit von Polymermaterial ist es notwendig, den Haltebügel bei der Fertigung aus einem Polymermaterial sehr viel komplexer zu gestalten, damit dieser die auf ihn wirkenden Kräfte aufnehmen kann, ohne dabei zu versagen. Ein Versagen kann zum Beispiel durch Verformen oder durch Bruch erfolgen. Eine aufgrund der geringeren Festigkeit des Polymermaterials verstärkte Form des Haltebügels würde bei einer Geometrie, die nicht einer durch die Schritte (a) bis (c) bestimmten Geometrie folgt, eine derart große Menge an Polymermaterial erfordern, dass keine Gewichtsersparnis gegenüber einem Haltebügel aus Stahl oder zumindest nur so eine geringe Gewichtsersparnis erfolgt, dass sich die Verwendung des Polymermaterials nicht lohnt.

Erfindungsgemäß weist der Haltebügel zwei umlaufende tragende Wandungen auf, die durch eine Rippenstruktur miteinander verbunden sind. Durch die Rippenstruktur können Kräfte von der inneren Wandung an die äußere Wandung übertragen werden. Die Rippenstruktur erlaubt es, im Unterschied zu einem Haltebügel aus Vollmaterial, Material einzusparen und so das Gewicht zu reduzieren. Durch die mit den Schritten (a) bis (c) bestimmte Geometrie lässt sich die Anzahl und die Dicke der Rippen optimieren, so dass eine bestmögliche Kraftübertragung von der inneren an die äußere Wandung bei geringstmöglichem Materialeinsatz erfolgen kann. Insbesondere ist es so zum Beispiel möglich, an Positionen, an denen eine große Kraft auftritt mehr Rippen oder Rippen mit höherer Wanddicke vorzusehen, wohingegen an Stellen, an denen nur eine geringe Belastung auftritt, die Anzahl der Rippen beziehungsweise deren Wanddicke zu reduzieren. Auch kann die Dicke der Wandungen und gegebenenfalls die Form der äußeren Wandung an die auftretenden Belastungen angepasst werden.

Das Polymermaterial, aus dem der Haltebügel gefertigt ist, ist vorzugsweise ein faserverstärkter Kunststoff. Durch die Verwendung eines faserverstärkten Kunststoffes lassen sich die mechanischen Eigenschaften des Polymermaterials, insbesondere dessen Zugfestigkeit verbessern. Eine Verbesserung der Zugfestigkeit ergibt sich dabei im Allgemeinen in Orientierungsrichtung der Fasern.

Im Allgemeinen wird der Haltebügel aus Polymermaterial durch ein Spritzgießverfahren hergestellt. Bei Verwendung eines faserverstärkten Kunststoffes als Polymermaterial ist die Faserorientierung dabei auch abhängig von den Einspritzparametern und dem Anspritzpunkt. Um den Ausnutzungsgrad der Festigkeit bestimmen zu können ist es daher bei Einsatz eines faserverstärkten Kunststoffes notwendig, zur Bestimmung der geeigneten Geometrie des Haltebügels vor der Berechnung des Ausnutzungsgrades der Festigkeit des Haltebügels in Schritt (a) eine Simulationsrechnung zur Bestimmung der Orientierung der Fasern im faserverstärkten Kunststoff und der Bindenähte im Bauteil durchzuführen. Dies ist notwendig, da sowohl die Orientierung der Fasern als auch die Bindenähte im Bauteil, insbesondere bei Einsatz eines faserverstärkten Kunststoffes aufgrund der Änderung der Faserorientierung im Bereich der Bindenähte, einen Einfluss auf die Festigkeit ausüben.

Geeignete Polymermaterialien, die zur Herstellung des Haltebügels eingesetzt werden können, sind insbesondere thermoplastische Polymere. Bevorzugte Kunststoffe sind Polyamide, Polyester, Polyacetale, Polysulfon, Polyethersulfon, Polyphenylensulfon, Polybutyleterephthalat und Polyolefine, beispielsweise Polypropylen oder Polyethylen, oder Mischungen daraus. Ganz besonders geeignet sind Polyamide, beispielsweise Polyamid 6 oder Polyamid 6.6.

Fasern, die zur Verstärkung eingesetzt werden können, sind insbesondere Glasfasern, Kohlenstofffasern oder Aramidfasern. Im Allgemeinen werden Kurzfasern eingesetzt, das heißt Fasern mit einer Faserlänge von weniger als 0,5 mm, bevorzugt von weniger als 0,4 mm. Es können jedoch auch sogenannte Langfasern, das heißt Fasern bis zu einer Länge von mehreren Millimetern, bevorzugt mit einer Länge bis zu 20 mm eingesetzt werden. Bevorzugt sind jedoch Kurzfasern. Ganz besonders bevorzugt sind Kurzglasfasern.

Die Bestimmung der Geometrie für den Haltebügel durch die Schritte (a) bis (c) sowie bei Einsatz eines faserverstärkten Kunststoffes zusätzlich der Bestimmung der Orientierung der Fasern im faserverstärkten Kunststoff und der Bindenähte im Haltebügel ist notwendig, da Polymere ein ausgeprägtes, nichtlineares Spannungs-DehnungsVerhalten bei hohen Beanspruchungen zeigen. Dieses Verhalten ist im Allgemeinen auch stark von der Dehnungsgeschwindigkeit abhängig. Bei großen Dehngeschwindigkeiten werden im Allgemeinen sehr viel höhere Streckspannungen erreicht als bei langsamer Beanspruchung. Zudem ist die Streckspannung bei vielen Polymeren im Druckbereich deutlich höher als im Zugbereich. Darüber hinaus bleiben bei großen Dehnungen inelastische Anteile, die bei Entlastung nicht mehr vollständig relaxieren. Kunststoffe zeigen somit sehr komplexes, nichtlinear-viskoplastisches Verhalten.

Da faserverstärkte thermoplastische Werkstoffe bessere mechanische Eigenschaften zeigen als unverstärkte Thermoplaste sind die faserverstärkten thermoplastischen Werkstoffe für den Haltebügel von besonderem Interesse. Aufgrund der Orientierung der Fasern durch den Verarbeitungsprozess, insbesondere beim Spritzgießen des Bauteils sind die mechanischen Eigenschaften der faserverstärkten thermoplastischen Werkstoffe nicht mehr isotrop. Dies führt zu einem anisotropen, das heißt richtungsabhängigen mechanischen Verhalten der Steifigkeit, Streckspannung und der Bruchdehnung des Materials.

Aufgrund der Fahrbewegung und der beim Fahren auftretenden Schwingungen der Räder, die zum Beispiel durch Unebenheiten im Fahrbahnbelag ungleichmäßig sein können, tritt eine ungleichmäßige dynamische Belastung des Haltebügels auf. Diese ungleichmäßige Beanspruchung des Bauteils führt zu einer von einer konstanten Belastung verschiedenen Beanspruchung. Aufgrund der ständigen Lastwechsel auf das Bauteil kann so bereits eine kleine Belastung zu einem Versagen des Bauteils führen. Dieses Verhalten wird durch die Bestimmung der Geometrie durch die Schritte (a) bis (c) sowie der Bestimmung der Orientierung der Fasern und der Bindenähte im Bauteil berücksichtigt.

Durch die Bestimmung der Geometrie mit den Schritten (a) bis (c) und der zusätzlichen Simulationsrechnung zur Bestimmung der Orientierung der Fasern im faserverstärkten Kunststoff und der Bindenähte im Haltebügel ist es möglich, die Geometrie des Haltebügels an die lokal auftretende Belastung anzupassen. Unter Geometrie des Haltebügels im Sinne der vorliegenden Erfindung wird zum Beispiel die Wanddicke, Dicke und Höhe von Verstärkungselementen und die Form des Haltebügels verstanden. Verstärkungselemente sind zum Beispiel Rippen am Haltebügel. So können zum Beispiel Bereiche des Haltebügels, in denen eine geringe Belastung auftritt, in einer geringeren Wanddicke ausgeführt werden und Bereiche des Haltebügels, die einer höheren Belastung unterliegen, in einer größeren Wanddicke. Durch diese Auslegung lässt sich Material und damit Gewicht einsparen. Zudem ist es möglich, die Wanddicke des Bauteils an die entsprechende lokale Belastung anzupassen, wodurch eine Reduzierung des erforderlichen Bauraumes möglich ist.

Wenn ein faserverstärkter Kunststoff eingesetzt wird, so erfolgt die Bestimmung der Orientierung der Fasern und der Bindenähte vorzugsweise durch Simulation des Herstellungsprozesses des Haltebügels. Neben der Orientierung der Fasern und der Bindenähte werden durch die Simulation des Herstellungsprozesses ebenfalls am Prozess beteiligte Größen, beispielsweise Druckverteilung und Temperatur, ermittelt.

Im Allgemeinen ist die Orientierungsverteilungsdichte der Fasern im Haltebügel inhomogen und hängt vom Herstellungsprozess ab. Für einen Spritzgießprozess, wie er vorzugsweise zur Herstellung des Haltebügels eingesetzt wird, wird die Orientierungsverteilungsdichte der Fasern mittels numerischer Integration aus der erweiterten Jeffery-Gleichung, wie sie zum Beispiel in G.B. Jeffery, "The motion of elipsoidal particles immersed in a viscous fluid", Proc. of the Royal Society of London, Series A, 1922, Seiten 161-179 beschrieben ist, aus den Daten der Simulation des Spritzgießprozesses berechnet. Hierbei erhält man für jeden Ort im Bauteil einen Faserorientierungstensor, aus dem eine Näherung für die Orientierungsverteilungsdichte folgt.

Zur Berechnung des Ausnutzungsgrades der Festigkeit des Haltebügels durch die Simulationsrechnung in Schritt (a) ist es erforderlich, das faserverstärkte Polymermaterial numerisch zu beschreiben. Die numerische Beschreibung erfolgt hierbei durch ein Materialgesetzt, das auf einem viskoplastischen Ansatz für das Polymermaterial und auf einem elastischen Modell für die Fasern beruht, das mit einem mikromechanischen Modell zur Beschreibung des Werkstoffverbundes, das heißt des faserverstärkten Polymermaterials, kombiniert wird. Das Polymermaterial wird mit einem elastischplastischen Materialmodell beschrieben. Das plastische Potential enthält neben der allgemein üblichen ersten Invariante des Deviators des Spannungstensors auch einen Polynomansatz in der zweiten und der dritten Invariante. Die Fließregel ist nicht assoziiert formuliert. Das Potential enthält ebenfalls neben der ersten Invariante des Deviators auch Terme der zweiten und dritten Invariante. Die Viskosität wird formuliert, indem die Fließbedingung temporär verletzt werden kann. Die Rückprojektion auf die Fließfläche ist über einen viskosen Term zeitabhängig. Für die dauerhafte Beanspruchung erreicht man die Lösung numerisch durch Iteration zu entsprechend langen Zeiten. Die Festigkeitshypothese für das Polymer beruht auf Versagensflächen, die ebenfalls neben der ersten Invariante auch die zweite und dritte Invariante des Spannungstensors enthalten. Die Dehnratenabhängigkeit geht in die Versagensbeschreibung über eine Gewichtung ein. Die Kalibrierung der Parameter des Modells erfolgt aus Zug-, Scher- und Druckversuchen.

Für das Fasermaterial, wenn ein faserverstärkter Kunststoff eingesetzt wird, wird elastisch sprödes Verhalten angesetzt. Parameter sind hierbei die Steifigkeit und die Bruchspannung des Fasermaterials.

Das mikromechanische Modell des Werkstoffverbundes beruht auf einem Homogenisierungsverfahren nach Mori-Tanaka, beschrieben in T. Mori und K. Tanaka, "Average stress in matrix and average elastic energy of materials with misfitting inclusions", Acta Metallurgica, Vol. 21, Mai 1973, Seiten 571-574 und J.D. Shelby, "The determination of the elastic field of an elipsoidal inclusion, and related problems", Proc. of the Royal Society of London, Series A, 1957, Seiten 376-396. Hier werden die Beiträge zum Materialverhalten der beiden Phasen, das heißt Polymer und Fasern, miteinander numerisch gewichtet. Als Parameter gelten hier der Fasergehalt, die Geometrie und die Orientierungsverteilungsdichte der Fasern.

Durch das Materialgesetzt lässt sich die Anisotropie durch die im Polymer enthaltenen Fasern, die Nicht-Linearität und die Dehnraten-Abhängigkeit resultierend aus dem Polymerwerkstoff, das zu der bekannten Zug-/Druck-Asymmetrie führt, sowie das Versagensverhalten ermitteln. Versagen tritt auf, wenn die Polymermatrix versagt, die Fasern brechen oder sich die Matrix von den Fasern löst. Zudem lässt sich das Materialgesetzt auf einfache Weise mit einer Simulation für den Prozess koppeln.

Die Berechnung des Ausnutzungsgrades der Festigkeit in Schritt (a) erfolgt durch ein übliches numerisches Verfahren. Derartige numerische Verfahren sind im Allgemeinen Finite-Differenzen-Verfahren, Finite-Elemente-Verfahren und Finite-Volumen-Verfahren. Bevorzugt wird zur Berechnung des Ausnutzungsgrades der Festigkeit ein Finite-Elemente-Verfahren eingesetzt. Um die numerische Berechnung durchführen zu können, ist es notwendig, den Haltebügel durch ein Gitternetz zu beschreiben. Hierzu wird die Kontur des Haltebügels in Form eines Gitternetzes abgebildet. Übliche Gitternetze, die in Finite-Elemente-Verfahren eingesetzt werden, sind Dreiecksgitter und Rechtecksgitter. Die Maschenweite des Gitters, das heißt der Abstand zwischen jeweils zwei miteinander verbundenen Punkten, wird so gewählt, das eine hinreichend genaue Abbildung des Haltebügels durch das Gitternetz möglich ist. Komplexe Bereiche erfordern somit eine geringere Maschenweite, während in weniger komplexen Bereichen eine größere Maschenweite ausreichend ist. Da zur Festigkeitsberechnung nicht nur die Oberfläche des Haltebügels ausreichend ist, sondern auch die inneren Bereiche modelliert werden müssen, wird der gesamte Haltebügel in Form eines räumlichen Gitternetzes abgebildet.

Wenn ein faserverstärkter Kunststoff eingesetzt wird, wird zur Berechnung des Ausnutzungsgrades der Festigkeit die in der Simulationsrechnung zur Bestimmung der Orientierung der Fasern im faserverstärkten Kunststoff und der Bindenähte bestimmte Orientierung der Fasern im faserverstärkten Kunststoff und die Bindenähte auf das Gitternetz übertragen. Weitere Größen, die für die Berechnung des Ausnutzungsgrades der Festigkeit erforderlich sind, sind Stoffgrößen des Kunststoffes und der Fasern. Insbesondere relevante Stoffgrößen sind beispielsweise E-Modul, Poissonzahl, Parameter für das plastische Potenzial, Viskositätsparameter und Bruchfestigkeiten des Polymers, Fasergeometrie und Delaminationsfestigkeit sowie E-Modul, Poissonzahl und Zugfestigkeit der Fasern. Hierbei ist jeweils auch die Druck- und Temperaturabhängigkeit der einzelnen Stoffdaten zu berücksichtigen. Aus diesen Größen werden die festigkeitsrelevanten Kennwerte für das faserverstärkte Polymermaterial mittels des mikromechanischen Modells zur Beschreibung des Werkstoffverbundes berechnet.

Die Simulationsrechnung zur Bestimmung der Orientierung der Fasern im faserverstärkten Kunststoff und der Bindenähte im Haltebügel ist bei Einsatz eines Spritzgießprozesses zur Herstellung des Haltebügels eine Modellierung des Spritzgießprozesses. Hierzu werden im Allgemeinen die Einspritzdüse und das Spritzgießwerkzeug durch ein Gitternetz abgebildet. Durch die Modellierung wird der Einspritzvorgang der Fasern enthaltenden Polymermasse beschrieben. Hierzu ist es notwendig, den gesamten Einspritzvorgang, während dem Polymermasse in das Werkzeug eingespritzt wird, zu beschreiben. Neben der dreidimensionalen örtlichen Beschreibung des Werkzeugs ist somit auch ein zeitlicher Verlauf des Einspritzvorganges zu beschreiben. Aus dem zeitlichen Verlauf des Einspritzprozesses ergibt sich die zeitliche Orientierung der Fasern in der Polymermasse. Gleichzeitig wird hierdurch auch die Position der Bindenähte im Bauteil beschrieben.

Weitere Größen, die durch die Modellierung des Herstellprozesses beschrieben werden, sind insbesondere der Druckverlauf und der Temperaturverlauf. Der Druckverlauf und der Temperaturverlauf werden dabei sowohl zeitlich als auch örtlich dargestellt. Nachdem aus den Stoffdaten, der Orientierungsverteilungsdichte der Fasern und der Lage der Bindenähte die festigkeitsrelevanten Kennwerte für das faserverstärkte Polymermaterial im Haltebügel bestimmt worden sind, ist es möglich, den Ausnutzungsgrad der Festigkeit zu bewerten. Hierzu wird eine Festigkeitssimulation am Haltebügel durchgeführt.

Als Randbedingung für die Festigkeitssimulation wird die lokale Belastung auf den Haltebügel eingesetzt. Um die notwendige Festigkeit, die der Haltebügel aufweisen muss, bestimmen zu können, ist auch hier wieder der zeitliche Verlauf über einen großen Zeitraum zu bestimmen. Insbesondere ist die dynamische Belastung zu berücksichtigen. Durch die Festigkeitssimulation werden die Schwachstellen des Haltebügels bestimmt. So zeigt sich zum Beispiel, an welchen Stellen des Haltebügels bei vorgegebener Belastung beispielsweise ein Verbiegen oder ein Abscheren eintritt. Wenn die Schädigung am Haltebügel bei einer Belastung eintritt, die niedriger liegt als die Belastung, der der Haltebügel ausgesetzt wird, so ist es erforderlich, die Wanddicke an diesen Stellen zu erhöhen. Gleichzeitig ist es möglich, an den Stellen, an denen kein Versagen des Haltebügels eintritt, eine niedrigere Wanddicke zu wählen. Auf diese Weise lässt sich die Wanddicke des Bauteils lokal an die jeweilige auftretende Belastung anpassen. Dies führt dazu, dass bei der späteren Produktion des Bauteils durch optimale Auslegung der Wanddicke Material eingespart werden kann, da nicht das gesamte Bauteil in maximaler Wanddicke gefertigt werden muss. Dies führt zu einer Gewichtsersparnis, durch die ein niedrigerer Kraftstoffverbrauch des Fahrzeugs ermöglicht wird. Zudem lässt sich auf diese Weise gegebenenfalls auch der Bauraum für den Haltebügel optimieren.

Um Belastungen auf den Haltebügel zu dämpfen und insbesondere auch zu vermeiden, dass jede Bewegung des Achsstabilisators an die Karosserie übertragen wird, ist der Achsstabilisator in einer Aufnahme aus einem elastischen Material aufgenommen. Die Aufnahme aus dem elastischen Material wird mit Hilfe des Haltebügels an der Karosserie des Kraftfahrzeuges oder auch an einem Federbein oder einer Federbeingabel der Radaufhängung montiert.

Die Aufnahme aus dem elastischen Material kann zum Beispiel in Form von zwei Halbschalen ausgeführt sein oder als einteilige Aufnahme, die seitlich geschlitzt ist. Aber auch jede beliebige andere geeignete Form, die dem Fachmann bekannt ist, ist möglich.

Als Elastomermaterial für die Aufnahme für den Achsstabilisator eignen sich zum Beispiel Naturkautschuk (NR), Ethylen-Propylen-Dien-Terpolymer (EPDM), Nitril-Butadien-Kautschuk (NBR), Styrol-Butadien-Kautschuk (SBR), Thermoplastische Polyurethane (TPU) und Silikone. Davon besonders bevorzugt sind Naturkautschuk und Ethylen-Propylen-Dien-Terpolymer.

Damit sich die Aufnahme aus dem elastischen Material nicht relativ zum Haltebügel verschieben kann, sind bei Haltebügeln aus Stahl, wie sie aus dem Stand der Technik bekannt sind, Bördelkanten ausgearbeitet, die als Anschlag für die Aufnahme aus dem elastischen Material wirken. Die Aufnahme aus dem elastischen Material wird lediglich von dem Haltebügel umschlossen und so an ihrer Position gehalten. Dies hat den Nachteil, dass durch die Bewegung des Achsstabilisators das elastische Material der Aufnahme gegen die Bördelkante gedrückt werden kann. Auch ist ein Verrutschen und Zusammenpressen der Aufnahme aus dem elastischen Material innerhalb des Haltebügels möglich, da keine feste Verbindung der Aufnahme aus elastischem Material und dem Haltebügel existiert. Dies führt weiterhin dazu, dass bei einem Verschieben der Aufnahme aus elastischem Material diese aufgrund der Reibung am Haltebügel regelmäßig gebremst wird und bei Aufbau einer ausreichend großen Kraft ein weiteres Stück rutscht. Dies führt zu einer starken Geräuschentwicklung. Sobald die Belastung auf die Aufnahme aus elastischem Material entfällt, zum Beispiel bei Stillstand des Fahrzeuges, rutscht die Aufnahme aus dem elastischen Material, gegebenenfalls ebenfalls unter Geräuschentwicklung, wieder zurück in die Ausgangsposition. Hierdurch wird ebenfalls eine Belastung auf die Aufnahme aus elastischem Material aufgebracht, die zu einer Schädigung der Aufnahme aus dem elastischen Material führen kann.

Bei Verwendung eines Polymermaterials für den Haltebügel wird die Reibung zwischen dem Material des Haltebügels und der Aufnahme aus dem elastischen Material reduziert, so dass diese mit einer geringeren Geräuschentwicklung innerhalb des Haltebügels verrutschen kann.

Bevorzugt ist es jedoch, die Aufnahme aus dem elastischen Material mit dem Polymermaterial für den Haltebügel zu umspritzen, wodurch eine stabile Verbindung der Aufnahme aus dem elastischen Material mit dem Polymermaterial entsteht. Durch die Temperatur der Polymerschmelze haftet das Polymermaterial an dem elastischen Material der Aufnahme.

Eine Verbesserung der Haftung von elastischem Material der Aufnahme und Polymermaterial des Haltebügels lässt sich erreichen, wenn auf das elastische Material der Aufnahme ein Primer aufgebracht wird. Der Primer dient dabei als Haftvermittler zwischen dem elastischen Material der Aufnahme und dem Polymermaterial des Haltebügels. Geeignete Primer sind dem Fachmann bekannt und im Handel erhältlich.

Die Haftung von elastischem Material der Aufnahme und Polymermaterial des Haltebügels hat den Vorteil, dass zum Einen auf die Bördelkante zur Fixierung der Aufnahme aus elastischem Material verzichtet werden kann und zudem ein Verschieben der Aufnahme aus dem elastischen Material relativ zum Haltebügel nicht mehr möglich ist. Dies führt zu einer weiteren Geräuschreduktion. Auch wird hierdurch die Belastung auf die Aufnahme aus dem elastischen Material reduziert, da diese nicht mehr in axiale Richtung komprimiert wird. Auch ist der freie Querschnitt durch den Verzicht der Bördelkante an den Außenflächen der Aufnahme aus elastischem Material größer, so dass hier eine bessere Verteilung der Last erfolgt. Zudem wird die Aufnahme aus elastischem Material nicht mehr gegen die Bördelkante gedrückt, was bei Aufnahmen aus dem Stand der Technik zu einer zusätzlichen starken Druckbeanspruchung geführt hat.

Um den Haltebügel aus Polymermaterial am Kraftfahrzeug befestigen zu können, sind an diesem vorzugsweise Haltelaschen ausgebildet. In den Haltelaschen sind im Allgemeinen Bohrungen ausgebildet, durch die Befestigungsmittel geführt werden können, um den Haltebügel zu befestigen. Als Befestigungsmittel werden zum Beispiel Schrauben oder Nieten eingesetzt.

Wenn der Haltebügel mit Schrauben fixiert wird, ist es vorteilhaft, Buchsen im Haltebügel aufzunehmen, durch die die Schrauben zur Befestigung geführt werden. Der Einsatz von Buchsen hat den Vorteil, dass diese durch die auf die Schrauben ausgeübte Haltekraft nicht zusammengedrückt und dadurch beschädigt werden können. Auch erfolgt eine verbesserte Krafteinleitung in den Haltebügel bei einer Belastung durch Relativbewegungen des Stabilisators. Die Buchsen sind vorzugsweise aus Stahl, Aluminium, Messing oder Magnesium gefertigt. Alternativ ist es auch möglich, Buchsen aus einem duroplastischen Werkstoff einzusetzen.

Die Buchsen sind bei einer Gestaltung des Haltebügels mit Laschen zur Befestigung in den Laschen angeordnet. Das Einbringen der Buchsen in den Haltebügel kann zum Beispiel beim Herstellprozess erfolgen. Hierzu werden die Buchsen in das Werkzeug eingelegt und von dem Polymermaterial zur Herstellung des Haltebügels umspritzt. Alternativ ist es auch möglich, in dem Haltebügel Durchgangsöffnungen auszubilden und in diese die Buchsen nach der Herstellung des Haltebügels einzubringen. Auch ist es möglich, die Buchsen zum Beispiel mit den Schrauben zu verbinden und gemeinsam mit der Schraube in den Haltebügel einzubringen.

Durch die Verwendung der Buchsen wird vermieden, dass durch die Befestigungsmittel Druckkräfte auf den Haltebügel ausgeübt werden, die zu einer Schädigung, beispielsweise einem Reißen des Haltebügels führen können.

Neben den Buchsen können am Haltebügel zusätzliche Funktionselemente ausgebildet sein. Die zusätzlichen Funktionselemente können zum Beispiel direkt bei der Herstellung mit an den Haltebügel angespritzt werden. Derartige Funktionselemente sind zum Beispiel zusätzliche Führungen, Halteclips oder Befestigungslaschen. Diese Führungen, Halteclips oder Befestigungslaschen können zum Beispiel genutzt werden, um Schwingungsdämpfer (Tilger), Betätigungszüge, Kabel oder sonstige Leitungen sowie Abdeckungen, zum Beispiel als Unterbodenschutz, zu montieren.

Alternativ zu Durchgangsöffnungen, durch die der Haltebügel mit dem Kraftfahrzeug verschraubt wird, ist es auch möglich, den Haltebügel in Bohrungen am Fahrzeug einzuclipsen.

In einer Ausführungsform sind die Durchgangsöffnungen an ihrer Unterseite, das heißt an der Seite, mit der der Haltebügel am Kraftfahrzeug anliegt, mit einem Elastomermaterial versehen. Dies hat den Vorteil, dass eine zusätzliche Dämpfung realisiert wird. Alternativ oder zusätzlich kann das Elastomermaterial auch an der inneren Wandung des Haltebügels angebracht sein und sich über die Laschen zur Befestigung des Haltebügels erstrecken.

Neben der vorstehend beschriebenen Ausführungsform, bei der der Haltebügel einteilig ausgeführt ist, ist es alternativ auch möglich, den Haltebügel mehrteilig, zum Beispiel zweiteilig auszuführen. In diesem Fall ist es zum Beispiel möglich, den Haltebügel in zwei Teilen auszuführen und diese zum Haltebügel miteinander zu verbinden. Die Verbindung der Teile kann zum Beispiel durch Clipsen erfolgen.

Nachfolgend wird die Erfindung anhand einer Zeichnung näher beschrieben.

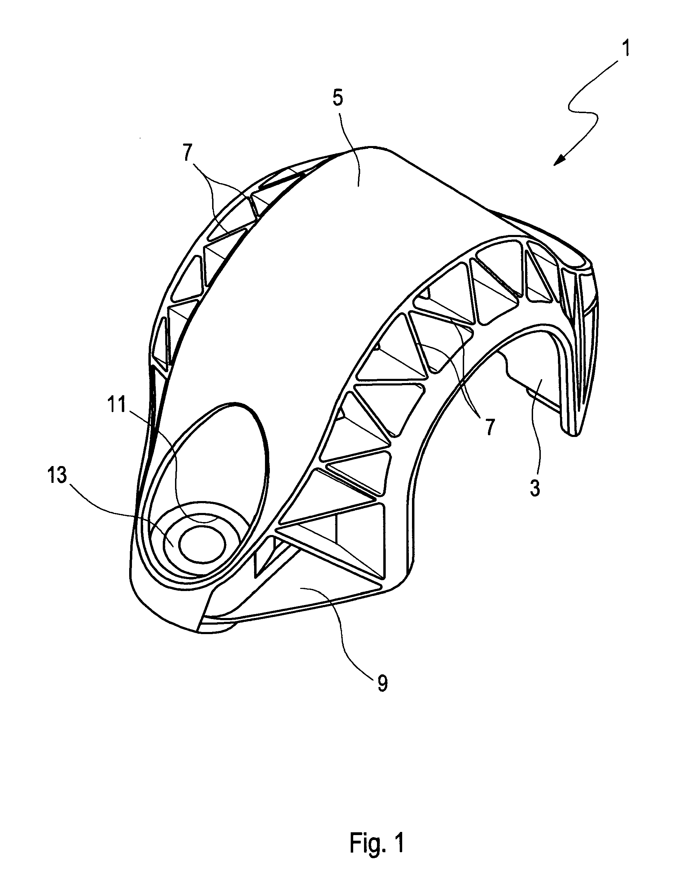

Die einzige Figur zeigt eine dreidimensionale Darstellung eines erfindungsgemäßen Haltebügels.

Ein erfindungsgemäßer Haltebügel 1 umfasst eine innere Wandung 3 und eine äußere Wandung 5. In der hier dargestellten Ausführungsform sind die innere Wandung 3 und die äußere Wandung 5 jeweils im Wesentlichen u-förmig ausgeführt und liegen im Wesentlichen parallel zueinander. Die Breite der äußeren Wandung 5 ist dabei kleiner als die Breite der inneren Wandung 3. Die innere Wandung 3 und die äußere Wandung 5 sind durch Rippen 7 miteinander verbunden. Über die Rippen können Kräfte, die auf die innere Wandung 3 wirken, an die äußere Wandung 5 übertragen werden. Dies führt zu einer Erhöhung der Stabilität des Haltebügels 1.

Zur Befestigung des Haltebügels 1 sind an den Schenkeln der inneren Wandung 3 Laschen 9 ausgebildet. Die äußere Wandung 5 erweitert sich stetig, so dass die äußere Wandung 5 und die Laschen 9 bündig abschließen. Durch die Laschen 9 und die äußere Wandung 5 ist eine Durchlassöffnung 11 ausgebildet. Die Durchlassöffnung 11 hat einen kreisförmigen Querschnitt und dient zur Befestigung des Haltebügels 1, beispielsweise an einer Karosserie oder an einem Federbein. Um durch Druckspannung eines Schraubenkopfes bei der Befestigung des Haltebügels 1 den Haltebügel 1 nicht zu schädigen, sind in den Durchlassöffnungen 11 Buchsen 13 aufgenommen. Die Buchsen 13 nehmen Druckkräfte vom Schraubenkopf auf. Auf diese Weise wird vermieden, dass eine Druckkraft von Befestigungsmitteln auf den Haltebügel 1 ausgeübt wird.

Die Wanddicken der inneren Wandung 3 und der äußeren Wandung 5 sowie die Anordnung und Wanddicken der Rippen 7 entsprechen einer Geometrie, die gemäß den vorstehend beschriebenen Schritten (a) bis (c) bestimmt wurde. Durch die so bestimmte Geometrie lässt sich die geringstmögliche Wanddicke und die minimal notwendige Anzahl an Rippen 7 bestimmen, so dass das Gewicht des Haltebügels 1 minimiert werden kann.

Zur Befestigung eines Achsstabilisators wird von der u-förmigen inneren Wandung 3 eine Aufnahme aus einem Elastomermaterial umschlossen. Der Achsstabilisator wird von der Aufnahme aus dem elastischen Material umschlossen, so dass die Aufnahme aus dem elastischen Material als Dämpfer wirkt. Das bedeutet, dass ein Teil der auf den Achsstabilisator wirkenden Kraft von der Aufnahme aus elastischem Material aufgenommen wird und sich dadurch die auf den Haltebügel 1 wirkende Kraft reduziert. Um aufgrund der auf die Aufnahme aus elastischem Material wirkenden Kräfte zu vermeiden, dass sich die Aufnahme aus elastischem Material relativ zum Haltebügel 1 verschiebt, ist es vorteilhaft, die Aufnahme aus elastischem Material fest mit dem Haltebügel 1 zu verbinden. Hierzu lässt sich zum Beispiel - wie vorstehend beschrieben - die Aufnahme aus elastischem Material direkt vom Material für den Haltebügel 1 umspritzen, so dass der Haltebügel 1 an der Aufnahme aus elastischem Material haftet. Eine Verbesserung der Haftung ergibt sich zum Beispiel durch die Verwendung eines Primers, der vor dem Umspritzen auf die Aufnahme aus elastischem Material aufgetragen wird.

Neben der vorstehend beschriebenen Ausführungsform, gemäß der die Aufnahme aus Elastomermaterial mit dem Material für den Haltebügel umspritzt wird, ist es auch möglich, zunächst den Haltebügel aus Polymermaterial herzustellen, vorzugsweise durch ein Spritzgießverfahren, gegebenenfalls auf den Haltebügel den Primer aufzutragen und anschließend den Haltebügel mit dem Primer in eine Vulkanisationsform einzubringen. In der Vulkanisationsform wird dann das elastische Material für die Aufnahme aufgespritzt und anschließend vulkanisiert.

## Patentansprüche

1. Haltevorrichtung für ein Lager eines Achsstabilisators in einem Kraftfahrzeug, umfassend eine Aufnahme für den Achsstabilisator aus einem elastischen Material sowie einen Haltebügel (1), der aus einem Polymermaterial gefertigt ist, der die Aufnahme aus dem elastischen Material zumindest teilweise umschließt, **dadurch gekennzeichnet, dass** der Haltebügel (1) zwei umlaufende tragende Wandungen (3 5) aufweist, die durch eine Rippenstruktur (7) miteinander verbunden sind und eine Geometrie aufweist, die einer durch nachfolgende Schritte bestimmten Geometrie entspricht:
(a) Berechnung eines Ausnutzungsgrades der Festigkeit des Haltebügels (1) durch eine Simulationsrechnung,
(b) Anpassen der Geometrie des Haltebügels (1) und/oder der Lage des mindestens einen Anspritzpunktes des Haltebügels (1) an das Ergebnis der Simulationsrechnung, wobei eine Verringerung der Wanddicke, Reduzierung der Anzahl an Versteifungselementen (7) oder eine Verkleinerung der Versteifungselemente (7) erfolgt, wenn der Ausnutzungsgrad einen vorgegebenen oberen Grenzwert übersteigt und eine Erhöhung der Wanddicke, eine Erhöhung der Anzahl an Versteifungselementen (7) oder eine Verstärkung der Versteifungselemente (7) erfolgt, wenn der Ausnutzungsgrad einen vorgegebenen unteren Grenzwert unterschreitet,
(c) Wiederholen der Schritte (a) und (b), wenn in Schritt (b) eine Änderung der Geometrie des Haltebügels (1) und/oder der Lage des mindestens einen Anspritzpunktes durchgeführt wurde.

2. Haltevorrichtung gemäß Anspruch 1, **dadurch gekennzeichnet, dass** das Polymermaterial, aus dem der Haltebügel (1) gefertigt ist, ein faserverstärkter Kunststoff ist.

3. Haltevorrichtung gemäß Anspruch 2, **dadurch gekennzeichnet, dass** vor der Berechnung des Ausnutzungsgrades der Festigkeit des Haltebügels (1) in Schritt (a) eine Simulationsrechnung zur Bestimmung der Orientierung der Fasern im faserverstärkten Kunststoff und der Bindenähte im Bauteil durchgeführt wird.

4. Haltevorrichtung gemäß einem der Ansprüche 1 bis 3, **dadurch gekennzeichnet, dass** das Polymermaterial Polyamid, Polyester, Polyacetal, Polysulfon, Polyphenylensulfid oder Polyolefin oder Mischungen daraus enthält.

5. Haltevorrichtung gemäß einem der Ansprüche 2 bis 4, **dadurch gekennzeichnet, dass** zur Verstärkung Glasfasern, Kohlenstofffasern, Aramidfasern eingesetzt werden.

6. Haltevorrichtung gemäß Anspruch 5, **dadurch gekennzeichnet, dass** die Länge der Fasern im Bereich von 0,1 bis 20 mm liegt.

7. Haltevorrichtung gemäß einem der Ansprüche 1 bis 6, **dadurch gekennzeichnet, dass** das elastische Material ausgewählt ist aus Naturkautschuk (NR), Ethylen-Propylen-Dien-Terpolymer (EPDM), Nitril-Butadien-Kautschuk (NBR), Styrol-Butadien-Kautschuk (SBR), Thermoplastische Polyurethane (TPU) und Silikone.

8. Haltevorrichtung gemäß einem der Ansprüche 1 bis 7, **dadurch gekennzeichnet, dass** der Haltebügel (1) und die Aufnahme für den Achsstabilisator durch Umspritzung der Aufnahme mit dem Polymermaterial für den Haltebügel (1) miteinander verbunden sind.

9. Haltevorrichtung gemäß einem der Ansprüche 1 bis 8, **dadurch gekennzeichnet, dass** im Haltebügel (1) Buchsen (13) aufgenommen sind.

10. Haltevorrichtung gemäß einem der Ansprüche 1 bis 9, **dadurch gekennzeichnet, dass** am Haltebügel (1) zusätzliche Funktionselemente ausgebildet sind.

11. Haltevorrichtung gemäß einem der Ansprüche 1 bis 10, **dadurch gekennzeichnet, dass** der Haltebügel (1) zwei- oder mehrteilig ausgebildet ist.

12. Haltevorrichtung gemäß einem der Ansprüche 1 bis 11, **dadurch gekennzeichnet, dass** die Durchgangsöffnungen (11) an ihrer Unterseite mit einem Elastomermaterial versehen sind.

13. Verfahren zur Auslegung einer Haltevorrichtung für ein Lager eines Achsstabilisators in einem Kraftfahrzeug, umfassend eine Aufnahme für den Achsstabilisator aus einem elastischen Material sowie einen Haltebügel (1), der die Aufnahme aus dem elastischen Material zumindest teilweise umschließt, wobei der Haltebügel zwei umlaufende tragende Wandungen (3, 5) aufweist, die durch eine Rippenstruktur (7) miteinander verbunden sind, und aus einem Polymermaterial gefertigt ist, wobei das Verfahren folgende Schritte aufweist:
(a) Berechnung eines Ausnutzungsgrades der Festigkeit des Haltebügels (1) durch eine Simulationsrechnung,
(b) Anpassen der Geometrie des Haltebügels (1) und/oder der Lage des mindestens einen Anspritzpunktes des Haltebügels (1) an das Ergebnis der Simulationsrechnung, wobei eine Verringerung der Wanddicke, Reduzierung der Anzahl an Versteifungselementen (7) oder eine Verkleinerung der Versteifungselemente (7) erfolgt, wenn der Ausnutzungsgrad einen vorgegebenen oberen Grenzwert übersteigt und eine Erhöhung der Wanddicke, eine Erhöhung der Anzahl an Versteifungselementen (7) oder eine Verstärkung der Versteifungselemente (7) erfolgt, wenn der Ausnutzungsgrad einen vorgegebenen unteren Grenzwert unterschreitet,
(c) Wiederholen der Schritte (a) und (b), wenn in Schritt (b) eine Änderung der Geometrie des Haltebügels (1) und/oder der Lage des mindestens einen Anspritzpunktes durchgeführt wurde.

14. Verfahren gemäß Anspruch 13, **dadurch gekennzeichnet, dass** vor der Berechnung des Ausnutzungsgrades der Festigkeit des Haltebügels (1) in Schritt (a) eine Simulationsrechnung zur Bestimmung der Orientierung der Fasern im faserverstärkten Kunststoff und der Bindenähte im Bauteil durchgeführt wird.

## Claims

1. A holding device for a bearing of an axle stabilizer in a motor vehicle, comprising a mount of an elastic material for the axle stabilizer and a holding bracket (1) which is produced from a polymer material, which at least partially encloses the mount of the elastic material, wherein the holding bracket (1) has two peripheral supporting walls (3, 5), which are connected to one another by a ribbed structure (7), and has a geometry which corresponds to a geometry determined by the following steps:
(a) calculating a degree of utilization of the strength of the holding bracket (1) by a simulation calculation,
(b) adapting the geometry of the holding bracket (1) and/or the position of the at least one gating point of the holding bracket (1) to the result of the simulation calculation, a lessening of the wall thickness, a reduction in the number of stiffening elements (7) or a decrease in size of the stiffening elements (7) taking place when the degree of utilization exceeds a prescribed upper limit value and an increase in the wall thickness, an increase in the number of stiffening elements (7) or a strengthening of the stiffening elements (7) taking place when the degree of utilization falls below a prescribed lower limit value,
(c) repeating steps (a) and (b) when a change in the geometry of the holding bracket (1) and/or of the position of the at least one gating point has taken place in step (b).

2. The holding device according to claim 1, wherein the polymer material from which the holding bracket (1) is produced is a fiber reinforced plastic.

3. The holding device according to claim 2, wherein, prior to the calculation of the degree of utilization of the strength of the holding bracket (1) in step (a), a simulation calculation is carried out to determine the orientation of the fibers in the fiber reinforced plastic and the weld lines in the component.

4. The holding device according to one of claims 1 to 3, wherein the polymer material comprises polyamide, polyester, polyacetal, polysulfone, polyphenylene sulfide or polyolefin or mixtures thereof.

5. The holding device according to one of claims 2 to 4, wherein glass fibers, carbon fibers or aramid fibers are used for the reinforcement.

6. The holding device according to claim 5, wherein the length of the fibers lies in the range from 0.1 to 20 mm.

7. The holding device according to one of claims 1 to 6, wherein the elastic material is selected from natural rubber (NR), ethylene-propylene-diene terpolymer (EPDM), nitrile butadiene rubber (NBR), styrene-butadiene rubber (SBR), thermoplastic polyurethanes (TPU) and silicones.

8. The holding device according to one of claims 1 to 7, wherein the holding bracket (1) and the mount for the axle stabilizer are connected to one another by encapsulation of the mount with the polymer material for the holding bracket (1).

9. The holding device according to one of claims 1 to 8, wherein bushes (13) are mounted in the holding bracket (1).

10. The holding device according to one of claims 1 to 9, wherein additional functional elements are formed on the holding bracket (1).

11. The holding device according to one of claims 1 to 10, wherein the holding bracket (1) is formed as two or more parts.

12. The holding device according to one of claims 1 to 11, wherein the through-openings (11) are provided with an elastomer material on their underside.

13. A process for designing a holding device for a bearing of an axle stabilizer in a motor vehicle, comprising a mount of an elastic material for the axle stabilizer and a holding bracket (1), which at least partially encloses the mount of the elastic material, where the holding bracket has two peripheral supporting walls (3, 5), which are connected to one another by a ribbed structure (7), and is produced from a polymer material, wherein the process has the following steps:
(a) calculating a degree of utilization of the strength of the holding bracket (1) by a simulation calculation,
(b) adapting the geometry of the holding bracket (1) and/or the position of the at least one gating point of the holding bracket (1) to the result of the simulation calculation, a lessening of the wall thickness, a reduction in the number of stiffening elements (7) or a decrease in size of the stiffening elements (7) taking place when the degree of utilization exceeds a prescribed upper limit value and an increase in the wall thickness, an increase in the number of stiffening elements (7) or a strengthening of the stiffening elements (7) taking place when the degree of utilization falls below a prescribed lower limit value,
(c) repeating steps (a) and (b) when a change in the geometry of the holding bracket (1) and/or of the position of the at least one gating point has taken place in step (b).

14. The process according to claim 13, wherein, prior to the calculation of the degree of utilization of the strength of the holding bracket (1) in step (a), a simulation calculation is carried out to determine the orientation of the fibers in the fiber reinforced plastic and the weld lines in the component.

## Revendications

1. Dispositif de fixation pour un palier d'une barre stabilisatrice dans un véhicule automobile, comportant un logement pour la barre stabilisatrice en un matériau élastique ainsi qu'un étrier de retenue (1), qui est fabriqué en un matériau polymère, qui entoure au moins partiellement le logement en matériau élastique, **caractérisé en ce que** l'étrier de retenue (1) présente deux parois porteuses périphériques (3, 5), qui sont reliées l'une à l'autre par une structure nervurée (7) et présente une géométrie, qui correspond à une géométrie déterminée par les étapes suivantes:
(a) calcul d'un taux d'utilisation de la résistance de l'étrier de retenue (1) par un calcul de simulation;
(b) adaptation de la géométrie de l'étrier de retenue (1) et/ou de la position de l'au moins un point d'injection de l'étrier de retenue (1) au résultat du calcul de simulation, dans lequel il se produit une diminution de l'épaisseur de paroi, une baisse du nombre d'éléments de renfort (7) ou une réduction des éléments de renfort (7), lorsque le taux d'utilisation dépasse une valeur limite supérieure prédéterminée et il se produit une augmentation de l'épaisseur de paroi, une hausse du nombre d'éléments de renfort (7) ou un renforcement des éléments de renfort (7) lorsque le taux d'utilisation descend en dessous d'une valeur limite inférieure prédéterminée,
(c) répétition des étapes (a) et (b) lorsque, à l'étape (b), une modification de la géométrie de l'étrier de retenue (1) et/ou de la position dudit au moins un point d'injection a été opérée.

2. Dispositif de fixation selon la revendication 1, **caractérisé en ce que** le matériau polymère, dont l'étrier de retenue (1) est constitué, est une matière plastique renforcée par des fibres.

3. Dispositif de fixation selon la revendication 2, **caractérisé en ce que**, avant le calcul du taux d'utilisation de la résistance de l'étrier de retenue (1) à l'étape (a), un calcul de simulation est effectué pour déterminer l'orientation des fibres dans la matière plastique renforcée par des fibres et des joints collés dans le composant.

4. Dispositif de fixation selon l'une quelconque des revendications 1 à 3, **caractérisé en ce que** le matériau polymère contient du polyamide, du polyester, du polyacétate, du polysulfone, du sulfure de polyphénylène ou une polyoléfine ou des mélanges de ceux-ci.

5. Dispositif de fixation selon l'une quelconque des revendications 2 à 4, **caractérisé en ce que** l'on utilise pour le renforcement des fibres de verre, des fibres de carbone, des fibres d'aramide.

6. Dispositif de fixation selon la revendication 5, **caractérisé en ce que** la longueur des fibres se situe dans une plage de 0,1 à 20 mm.

7. Dispositif de fixation selon l'une quelconque des revendications 1 à 6, **caractérisé en ce que** le matériau élastique est sélectionné parmi le caoutchouc naturel (NR), le terpolymère éthylène-propylène-diène (EPDM), le caoutchouc nitrile-butadiène (NBR), le caoutchouc styrène-butadiène (SBR), les polyuréthanes thermoplastiques (TPU) et les silicones.

8. Dispositif de fixation selon l'une quelconque des revendications 1 à 7, **caractérisé en ce que** l'étrier de retenue (1) et le logement pour la barre stabilisatrice sont reliés l'un à l'autre par enrobage du logement avec le matériau polymère pour l'étrier de retenue (1).

9. Dispositif de fixation selon l'une quelconque des revendications 1 à 8, **caractérisé en ce que** des douilles (13) sont placées dans l'étrier de retenue (1).

10. Dispositif de fixation selon l'une quelconque des revendications 1 à 9, **caractérisé en ce que** des éléments fonctionnels supplémentaires sont formés sur l'étrier de retenue (1).

11. Dispositif de fixation selon l'une quelconque des revendications 1 à 10, **caractérisé en ce que** l'étrier de retenue (1) est réalisé en deux ou plusieurs parties.

12. Dispositif de fixation selon l'une quelconque des revendications 1 à 11, **caractérisé en ce que** les ouvertures de passage (11) sont garnies d'un matériau élastomère sur leur côté inférieur.

13. Procédé de conception d'un dispositif de fixation pour un palier d'une barre stabilisatrice dans un véhicule automobile, comportant un logement pour la barre stabilisatrice en un matériau élastique ainsi qu'un étrier de retenue (1), qui entoure au moins partiellement le logement en matériau élastique, dans lequel l'étrier de retenue présente deux parois porteuses périphériques (3, 5) qui sont reliées l'une à l'autre par une structure nervurée (7) et est fabriqué en un matériau polymère, dans lequel le procédé présente les étapes suivantes:
(a) calcul d'un taux d'utilisation de la résistance de l'étrier de retenue (1) par un calcul de simulation;
(b) adaptation de la géométrie de l'étrier de retenue (1) et/ou de la position de l'au moins un point d'injection de l'étrier de retenue (1) au résultat du calcul de simulation, dans lequel il se produit une diminution de l'épaisseur de paroi, une baisse du nombre d'éléments de renfort (7) ou une réduction des éléments de renfort (7), lorsque le taux d'utilisation dépasse une valeur limite supérieure prédéterminée et il se produit une augmentation de l'épaisseur de paroi, une hausse du nombre d'éléments de renfort (7) ou un renforcement des éléments de renfort (7) lorsque le taux d'utilisation descend en dessous d'une valeur limite inférieure prédéterminée,
(c) répétition des étapes (a) et (b) lorsque, à l'étape (b), une modification de la géométrie de l'étrier de retenue (1) et/ou de la position dudit au moins un point d'injection a été opérée.

14. Procédé selon la revendication 13, **caractérisé en ce que**, avant le calcul du taux d'utilisation de la résistance de l'étrier de retenue (1) à l'étape (a), on effectue un calcul de simulation pour déterminer l'orientation des fibres dans la matière plastique renforcée par des fibres et des joints collés dans le composant.
